Europäisches Patentamt

European Patent Office

Office européen des brevets

(11) Publication number: **0 126 459**
**B1**

(12) **EUROPEAN PATENT SPECIFICATION**

(45) Date of publication of patent specification: **16.08.89**

(51) Int. Cl.⁴: **B 29 C 67/20**

(21) Application number: **84105701.1**

(22) Date of filing: **18.05.84**

(54) **A process for the production of expandable granules of thermoplastic polymers and relative apparatus.**

(30) Priority: **19.05.83 IT 2118083**

(43) Date of publication of application:
**28.11.84 Bulletin 84/48**

(45) Publication of the grant of the patent:
**16.08.89 Bulletin 89/33**

(84) Designated Contracting States:
**BE DE FR GB NL**

(56) References cited:
**BE-A- 668 324**
**FR-A-1 595 014**
**FR-A-2 009 426**
**GB-A- 908 089**
**GB-A-1 062 307**

(73) Proprietor: **Montedison S.p.A.**
**31, Foro Buonaparte**
**I-20121 Milan (IT)**

(72) Inventor: **Biglione, Gianfranco**
**63, Viale Risorgimento**
**Mantova (IT)**
Inventor: **Cigna, Giuseppe**
**7, Viale A. Manzoni**
**Mantova (IT)**
Inventor: **Rinaldi, Roberto**
**3/A, Via Dugoni**
**Mantova (IT)**

(74) Representative: **Weinhold, Peter, Dr. et al**
**Patentanwälte Dr. V. Schmied-Kowarzik Dipl.-**
**Ing. G. Dannenberg Dr. P. Weinhold Dr. D. Gudel**
**Dipl.-Ing. S. Schubert Dr. P. Barz**
**Siegfriedstrasse 8**
**D-8000 München 40 (DE)**

Courier Press, Leamington Spa, England.

## Description

The present invention relates to a process for the production of expandable granules of thermoplastic polymers and an apparatus for carrying out said process.

More particularly, the present invention relates to a process for the production by extrusion of non-oriented and non-stressed expandable polymers, particularly suitable for the production of expanded articles.

It is known that thermoplastic polymers, such as for instance polystyrene, may be expanded by mixing the polymer intimately with an expanding agent and then heating it under conditions such that its viscosity decreases and the expanding agent is allowed to vaporize and to form quite a number of closed cells in the polymer.

When polystyrene is employed, as a rule an organic liquid vaporizable substance, such as e.g. a hydrocarbon containing from 4 to 6 carbon atoms, is used as expanding agent.

The amount of expanding agent contained in the polymer may range between 2 and 10% by weight.

The expandable polymers are generally provided in the form of beads or granules which by action of heat, and in particular water vapour, are first expanded until the desired density is reached and, after maturation in the air, are molded to form expanded blocks and shaped articles.

The obtained expanded articles have a closed cell structure and are suitable to be used in important fields, such as in the fields of building, refrigeration and packaging.

These expandable beads are obtained by means of a polymerization process in suspension, suitably combined with an impregnation of the polymer with the expanding agent.

Said(discontinuous)process provides a product of good quality, but of rather broad granulometry which necessitates a subsequent screening to remove particles of unwanted size.

Moreover, the polymerization process in suspension involves substantial restrictions as to the production of particular products, such as for instance the production of coloured expandable beads, because some kinds of dyes or pigments either can be incorporated in the polymer only with difficulty or alternatively they inhibit the polymerization. The same problems arise with nucleating agents which are generally added to improve the cellular structure of the expanded polymer.

Another process for the production of expandable polystyrene, which is less important in industrial practice, comprises adding the expanding agent to the molten polymer during extrusion, drawing the resulting mass to form spaghetti-like bodies and cooling and cutting said bodies to obtain expandable granules.

Said type of process involves the feeding of polystyrene granules into an extruder with continuous injection (by means of a metering pump) of an expanding agent into the extrusion melt.

The resulting expandable mass is drawn so as to result in spaghetti-like bodies, which are cooled in cold water in order to rapidly bring them from the extrusion temperature to a temperature lower than the Tg of the expandable polymer.

This rapid cooling allows to avoid the polymer expansion, but it presents the great drawback of inducing orientation and stress caused by quenching within the granules which, as is known, adversely affects the uniformity of the cellular structure and the performance of the expanded product.

In order to improve the quality of the expandable granules obtained by extrusion, it has been proposed to eliminate the orientation and stress frozen therein by means of subsequent annealing at room pressure and at a temperature lower than the Tg of the polymer.

Obviously, said operation calls for an additional stage which is relatively time-consuming. Furthermore, since it has to be carried out at a temperature lower than the Tg of the expandable polymer so as to avoid expansion of the granules said annealing operation does not completely eliminate the above mentioned drawbacks.

In contrast, in order to eliminate said drawbacks, it seems to be necessary to work at a temperature higher than the Tg of the polymer and to cool slowly. This process, however, involves the risk of the undesired expansion of the material.

GB-A-908 089 discloses a process for the production by extrusion of expandable granules of thermoplastic polymers which comprises the extrusion of a thermoplastic polymer containing expanding agent into a pressure chamber at a temperature which is higher than the softening temperature of the thermoplastic polymer by at least 35 and not more than 150°C and cooling the thermoplastic polymeric material to a temperature below its softening temperature in the same pressure chamber. The above temperature range is that of the extruded polymer while the temperature in the pressure chamber is lower than the softening temperature of the polymer. Moreover, nothing is said in said document about the cooling rate.

GB-A-1 062 307 discloses an apparatus for producing, by extrusion, expandable granules of thermoplastic polymers, conprising an extruder, a means for injecting expanding agent into the extruder, a die-head, a cutter, pipes for feeding water or fluid to said die-head, an annealing tower for the slow cooling (annealing) of the granules, pipes for feeding the granules to said tower and means for the recovery of the water or of the fluid.

Additionally, FR-A-2 009 426 discloses an apparatus for the same purpose as above which shows a chamber on the extruder into which cooling liquid is fed under pressure. An object of the present invention is to provide a process for the production by extrusion of spherical granules of thermoplastic polymers substantially similar to the ones obtained by the polymerization process.

More particularly, an object of the present invention is to provide a process for the production by extrusion of spherical granules of expandable thermoplastic polymers substantially free of orientation and stress caused by quenching.

A further object of the present invention is to provide an apparatus for carrying out the above process.

According to the present invention the above and other objects are achieved by means of a process for the production of expandable granules of a thermoplastic polymer, said process comprising extrusion of the polymer in which an expanding agent has been incorporated into a pressurized chamber and, under pressure, comminution and cooling of the extrudate to a temperature below its softening point, wherein the following successive steps are carried out:

a) extrusion of the polymer through a die-head; the process being characterized by

b) immediate cutting of the polymer at the die-head outlet and cooling of the thus obtained granules in a bath of water or a fluid which bath is kept at a temperature higher than the Tg of the expandable polymer; and

c) slow cooling of the granules obtained in step b) from a temperature of at least (Tg +5°C) to a temperature of at most (Tg −5°C) at a cooling rate of less than 3°C/min; both the cutting of the polymer to granules and the cooling of said granules being carried out under a pressure of more than 2 bar (0.2 MPa).

The Tg is determined by DSC (differential scanning calorimetry), using a predetermined amount of material (2-3 granules) and heating it at a rate of 10°C/min. The Tg value is obtained graphically by determining the intersection of the tangent of the base line preceding the transition with the tangent through the point of inflexion relative to the transition.

The apparatus for carrying out the above process comprises:

a) an extruder;

b) means for injecting the expanding agent into the extruder;

c) a die-head;

d) a cutter and pipes for feeding the water or fluid to said die-head;

e) an annealing tower for the slow cooling (annealing) of the granules.

f) pipes for feeding the granules to said tower; and

g) means for the recovery of the water or the fluid; and is characterized in that it additionally comprises:

h) a chamber fastened to the die-head and surrounding the free surface thereof so that water or fluid under pressure can be fed to the die-head; and

i) a pressurization device to keep under pressure said chamber, the annealing tower, the pipes for feeding the granules and the recovery means for the water or the fluid; and that the lower part of the annealing tower is provided with means for feeding water or fluid heated to a temperature such as to carry out cooling of the granules from a temperature of at least (Tg +5°C) to at most (Tg −5°C) of the expandable polymer, at a rate of less than 3°C/min, preferably 1−2°C/min.

It should be pointed out that the essential features of the process of the present invention are the cutting of the expandable polymer, at the outlet of the die-head, under pressure and at a temperature higher than its Tg and the very slow cooling of the granules until a temperature lower than its Tg is reached.

Said conditions are essential both for avoiding a beginning expansion of the granules and for keeping at a minimum the formation of orientation, stress and/or internal holes caused by quenching in said granules.

The expandable granules obtained according to the process of the present invention have a narrow granulometric distribution and are, from the point of their performance in the subsequent operations of expansion and shape molding, similar to the well known expandable beads obtained by incorporating the expanding agent in the polymer during the suspension polymerization process.

The temperature at which the polymer is extruded depends on the softening temperature of the polymer composition containing the expanding agent. To avoid solidification or obstruction of the polymer in the extrusion holes, the extrusion temperature is always kept much higher than the softening temperature.

As is known, the required extrusion temperature additionally depends on the size of the die-head holes and, in the present process, also on the temperature of the water in which the extruded polymer is cooled. Thus, when e.g. polystyrene containing from 1 to 4% by weight of pentane as expanding agent is used the extrusion temperature ranges between 100 and 130°C, if the extrusion holes have a diameter of 2-4 mm. Higher temperatures are required when the holes are smaller. Generally, temperatures up to 200°C may be used for extrusion holes having a diameter smaller than 1 mm.

The temperature of the water or of the fluid into which the granules are allowed to fall after the cutting depends on the amount of expanding agent in the polymer. Generally, this temperature ranges between room temperature and 80°C. Beside water other fluids, such as glycerol or ethylene glycol or a mixture of water and ethylene glycol, may be used.

The extrusion die-head may contain several holes having a diameter that may vary between 0.5 and 4 mm. The cooling of the granules is carried out very slowly, preferably at a rate of 1-2°C/min, in a suitable annealing tower, preferably provided with stirrer and internal baffles, in order to regulate and slow down the granule drop.

In this annealing tower, the particle temperature is brought from 40-80°C to 20-40°C.

Among the thermoplastic polymers particularly suitable for the process of the present invention polystyrene is to be mentioned in the first place; however, other thermoplastic polymers, such as polyolefins, poly-vinyl-aromatic compounds, poly-vinyliden-aromatic compounds or copolymers thereof may also be used. Mixtures of thermoplastic polymers can be used as well.

The vaporizable expanding agent can be a liquid organic substance which is not a solvent for the polymer. Preferably, the expanding agent is an organic liquid boiling, at standard pressure, between 10°C and 90°C and preferably between 20°C and 80°C. Generally, aliphatic saturated hydrocarbons, such as n-pentane, iso-pentane or mixtures thereof, are preferred. Butane, hexane, petroleum ether, cyclopentane or fluoro chloro hydrocarbons may also be used.

If desired, the polymer may contain one or more conventional additives, e.g. nucleating agents, modifiers, dyes and stabilizers.

The expandable polymer, as soon as it is extruded at the die-head outlet, is cut by using the known technique of cutting at the die-head face and the granules thus obtained fall into the water or into the hot fluid surrounding said face.

The granules are conveyed by the fluid flow into an annealing tower, whereto, from the bottom, the same fluid is fed at a temperature regulated such that a slow cooling of the granules is obtained until a temperature is reached which is lower than the Tg of the expandable polymer by at least 5°C. At the outlet of the annealing tower the granules are separated from the fluid by means of a screen, dried, preferably with hot air, and collected in a container.

The whole system, comprising the chamber that surrounds the die-head face, the cooling tower and the pipes for the fluid are kept under pressure, for instance by means of a standard pressurization pot. Pressures higher than 0.2 MPa (2 bar) and preferably between 0.5 and 1.5 MPa (5 and 15 bar) are used.

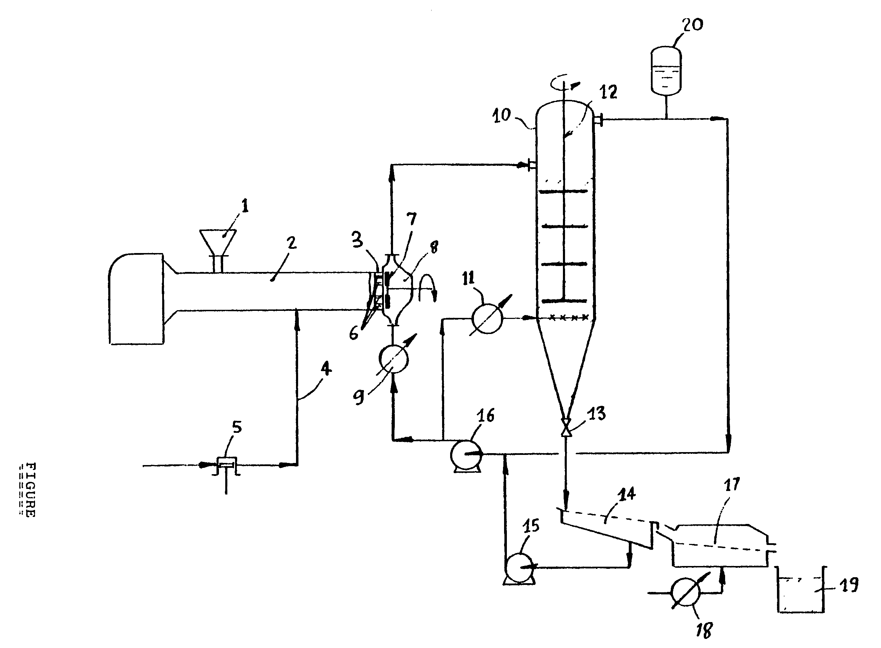

The present invention will be better understood by reference to the figure of the enclosed drawing which represents a schematic illustration of the apparatus suitable for carrying out the process of the present invention.

With reference to the figure, the polystyrene granules are fed, through hopper (1), to a screw extruder (2) of known type for plasticizing the polystyrene and the plasticized polymer is allowed to move, under pressure, towards die-head (3). The expanding agent, in particular pentane, is fed to extruder (2) through injection line (4) and by means of pump (5).

The last section of the extruder (2) is shaped such as to provide for the required mixing in order to ensure an intimate and perfect distribution of pentane in the polystyrene.

The polymer containing pentane is extruded through holes (6) of the die-head (3) and is immediately cut by means of a cutting knife (7) rotating tangentially with respect to the free surface of the die-head.

The polymer in the form of granules enters cutting chamber (8) that surrounds the die-head and contains water or another fluid at a pressure higher than 0.2 MPa (2 bar) and at a temperature higher than the Tg of the expandable polymer, preferably between 40° and 80°C. A heat exchanger (9) serves to maintain the water entering chamber (8) at the required temperature. The granules are conveyed by the water flow to the upper part of an annealing tower (10) to which, from the lower part, water or another fluid is fed, kept by exchanger (11) at a temperature such as to carry out the cooling of the granules from at least (Tg +5°C) to at most (Tg −5°C) of the expandable polymer. The dropping rate of the granules into the annealing tower (10) is regulated by means of a stirrer (12). The polymer granules and the water are discharged from the bottom of tower (10) through a time valve (13). The sizes of tower (10) and time valve (13), the velocity of stirrer (12) and the amount of the granules fed into the tower, are adjusted so as to allow the granules to remain in annealing tower (10) for the period of time necessary to cool them at a rate of 1-2°C/min under pressure (kept by the pressurization pot (20)). The granules discharged through valve (13) fall onto a screen (14), where the separation water/granules is carried out. Thereafter the granules are dried in device (17) by means of air coming from exchanger (18) and are collected in container (19). The recovered water is recycled by means of pumps (15) and (16).

For a better understanding of the present invention, some illustrative examples are given hereinafter which, however, are of non-limiting character.

### Example 1

Polystyrene having a melt index of 10 g/10 min was fed to extruder (2) through hopper (1). Through pump (5) and line (4) a n-pentane/iso-pentane (70/30 by weight) mixture in an amount of about 6.2% by weight, was added to the molten polymer. The resulting expandable mass, having a temperature of about 160°C, was forced through an extrusion die-head (3) provided with 20 holes, each of them having a diameter of 0.7 mm. The polymer coming out of the die-head was cut by means of knife (7), rotating in contact with the surface of die-head (3), to obtain spheroidal granules having a diameter of about 1.2 mm. Die-head (3) protruded into chamber (8), where the water circulated at a pressure of 0.9 MPa (9 bar) and at a temperature of 62°C. By the water flow, the cut granules were conveyed to the upper part of annealing tower (10). In tower (10) the granules were slowly cooled to about 42°C, by injecting, from the bottom of said tower, water heated to about 40°C by exchanger (11). The drop of the granules and the time valve (13) were regulated so as to adjust the residence time of the granules in tower (10) to about 15 minutes. The granules were isolated in screen (14), dried by means of air of 25°C in device (17) and collected in container (19). The expandable granules containing 6% by weight of expanding agent, were pre-expanded in a continuous pre-expander with a vapor pressure of 0.02 MPa (0.2 Ate) so as to obtain a density of 18 g/l. The pre-expanded particles had a uniform cellular structure, with closed cells having an average diameter of about 50 μm.

Example 2 (comparison example)

Example 1 was repeated, except for feeding water to chamber (8) at a pressure of 0.2 MPa (2 bar). The obtained granules, before pre-expansion, had been partially expanded. After pre-expansion, the particles showed a very non-uniform and irregular cellular structure.

Example 3 (comparison example)

Example 1 was repeated, except for feeding water to chamber (8) at 20°C and at a pressure of 0.2 MPa (2 bar), and directly collecting the granules coming out of chamber (8). Granules were obtained which showed practically no expansion. Said granules after pre-expansion with vapour at 0.02 MPa (0.2 Ate), displayed a density of 18 g/l and a non-uniform cellular structure with a circular external rim consisting of cells having an average diameter of about 40μm and an internal part consisting of larger non-uniform cells, varying from 40 to 150 μm in diameter.

## Claims

1. A process for the production of expandable granules of a thermoplastic polymer, said process comprising extrusion of the polymer in which an expanding agent has been incorporated into a pressurized chamber and, under pressure, comminution and cooling of the extrudate to a temperature below its softening point, wherein the following sucessive steps are carried out:

a) extrusion of the polymer through a die-head; the process being characterized by

b) immediate cutting of the polymer at the die-head outlet and cooling of the thus obtained granules in a bath of water or a fluid which bath is kept at a temperature higher than the Tg of the expandable polymer; and

c) slow cooling of the granules obtained in step b) from a temperature of at least (Tg +5°C) to a temperature of at most (Tg −5°C) at a cooling rate of less than 3°C/min; both the cutting of the polymer to granules and the cooling of said granules being carried out under a pressure of more than 2 bar (0.2 MPa).

2. A process according to claim 1, wherein the temperature of the bath of water, or of a fluid depends on the content of the expanding agent in the polymer and is generally between room temperature and 80°C.

3. A process according to any one of the preceding claims, wherein the cooling of the granules is carried out at a rate lower than 1-2°C/minute.

4. A process according to any one of the preceding claims wherein, during the cooling, the temperature of the granules is brought from 40°-80°C to 20°-40°C.

5. A process according to any one of the preceding claims, wherein the cutting of the polymer is carried out at the die-head face.

6. A process according or any one of the preceding claims, wherein the cutting of the polymer at the die-head outlet and the cooling of the granules are carried out at a pressure between 5 and 15 bar (0.5 to l.5 MPa).

7. A process according to any one of the preceding claims wherein the thermoplastic polymer is polystyrene.

8. Apparatus for carrying out the process according to claim 1, comprising:

a) an extruder (2);

b) means (5) for injecting the expanding agent into the extruder (2);

c) a die-head (3);

d) a cutter (7) and pipes for feeding the water or fluid to said die-head (3);

e) an annealing tower (10) for the slow cooling (annealing) of the granules;

f) pipes for feeding the granules to said tower (10); and

g) means (14, 15, 16) for the recovery of the water or the fluid;

characterized in that it additionally comprises:

h) a chamber (8) fastened to the die-head (3) and surrounding the free surface thereof so that water or fluid under pressure can be fed to the die-head (3); and

i) a pressurization device (20) to keep under pressure said chamber (8), the annealing tower (10), the pipes for feeding the granules and the recovery means (14, 15, 16) for the water or the fluid and that the lower part of the annealing tower (10) is provided with means (11) for feeding water or fluid heated to a temperature such as to carry out cooling of the granules from a temperature of at least (Tg +5°C) to at most (Tg −5°C) of the expandable polymer, at a rate of less than 3°C/minute, preferably 1-2°C/minute.

9. Apparatus according to claim 8, wherein the pressurization device (20) is a pot.

10. Apparatus according to claim 8 or 9, wherein the annealing tower (10) is provided with a stirrer (12) and/or internal baffles to regulate and slow down the granule drop.

11. Apparatus according to any one of claims 8 to 10, wherein the bottom of the annealing tower (10) is provided with a time valve (13).

## Patentansprüche

1. Verfahren zur Herstellung von expandierbarem Granulat aus einem thermoplastischen Polymer, das umfaßt: das Extrudieren des Polymers, welchem ein Expandierungsmittel einverleibt worden ist, in eine Druckkammer und unter Druck, Zerkleinern und Abkühlen des Extrudates auf eine Temperatur unterhalb von dessen Erweichungspunkt, worin die folgenden, aufeinanderfolgenden Schritte durchgeführt werden:

a) Extrudieren des Polymers durch einen Extruderkopf, und das Verfahren gekennzeichnet ist durch

b) das sofortige Schneiden des Polymers am Extruderkopfauslaß und Abkühlen des so erhaltenen Granulats in einem Bad aus Wasser oder einem fließbaren Material, wobei das Bad auf einer Temperatur über der Tg des expandierbaren Polymers gehalten wird, und

c) das langsame Abkühlen des in Stufe b) erhaltenen Granulats von einer Temperatur von mindestens (Tg +5°C) auf eine Temperatur von höchstens (Tg −5°C) mit einer Abkühlgeschwindigkeit von weniger als 3°C/min; wobei sowohl das Schneiden des Polymers zum Granulat als auch das Abkühlen des Granulats unter einem Druck von mehr als 2 bar (0,2 MPa) durchgeführt wird.

2. Verfahren nach Anspruch 1, worin die Temperatur des Bades aus Wasser oder einem fließbaren Material vom Gehalt des Expandierungsmittels im Polymer abhängt und gewöhnlich zwischen Zimmertemperatur und 80°C liegt.

3. Verfahren nach irgendeinem der vorhergehenden Ansprüche, worin das Abkühlen des Granulats mit einer Geschwindigkeit von unter 1−2°C/min durchgeführt wird.

4. Verfahren nach irgendeinem der vorhergehenden Ansprüche, worin während des Abkühlens die Temperatur des Granulats von 40—80°C auf 20—40°C gebracht wird.

5. Verfahren nach irgendeinem der vorhergehenden Ansprüche, worin das Schneiden des Polymers an der Extruderkopfvorderfläche durchgeführt wird.

6. Verfahren nach irgendeinem der vorhergehenden Ansprüche, worin das Schneiden des Polymers am Extruderkopfauslaß und das Abkühlen des Granulats bei einem Druck zwischen 5 und 15 bar (0,5 bis 1,5 MPa) durchgeführt werden.

7. Verfahren nach irgendeinem der vorhergehenden Ansprüche, worin das thermoplastische Polymer Polystyrol ist.

8. Vorrichtung zur Durchführung des Verfahrens nach Anspruch 1, die umfaßt:

a) eine Extruder (2),

b) Ausrüstung (5) zum Einspritzen des Expandierungsmittels in den Extruder (2),

c) einen Extruderkopf (3),

d) eine Schneidausrüstung (7). und Leitungen zum Einführen von Wasser oder fließbarem Material in den Extruderkopf (3)

e) einen Temperungsturm (10) zum langsamen Abkühlen (Tempern) des Granulats,

f) Leitungen zum Einführen des Granulats in den Turm (10) und

g) Ausrüstung (14, 15, 16) zur Rückgewinnung von Wasser oder fließbarem Material, dadurch gekennzeichnet, daß sie weiterhin umfaßt:

h) eine Kammer (8), die am Extruderkopf (3) befestigt ist und dessen freie Oberfläche umgibt, so daß Wasser oder fließbares Material unter Druck zum Extruderkopf (3) geführt werden können, und

i) eine Druckanlage (20), um die Kammer (8), den Temperungsturm (10), die Leitungen zum Einführen des Granulats und die Rückgewinnungsausrüstung (14, 15, 16) für Wasser oder das fließbare Material unter Druck zu halten, und daß der untere Teil des Temperungsturmes (10) mit einer Ausrüstung (11) zur Einführung des auf eine solche Temperatur erhitzten Wassers oder fließbaren Materials versehen ist, daß das Abkühlen des Granulats des expandierbaren Polymers von einer Temperatur von mindestens (Tg +5°C) auf höchstens (Tg −5°C) mit einer Geschwindigkeit von weniger als 3°C/min, vorzugsweise 1 bis 2°C/min, durchgeführt werden kann.

9. Vorrichtung nach Anspruch 8, worin die Druckanlage (20) ein Topf ist.

10. Vorrichtung nach Anspruch 8 oder 9, worin der Temperungsturm (10) mit einem Rührer (12) und/oder inneren Prallplatten versehen ist, um das Herabfallen des Granulates zu regeln und zu verlangsamen.

11. Vorrichtung nach irgendeinem der Ansprüche 8 bis 10, worin der Boden des Temperungsturmes (10) mit einem Zeitventil (13) versehen ist.

**Revendications**

1. Un procédé de préparation de granulés expansibles d'un polymère thermoplastique, ce procédé consistant à extruder le polymère dans lequel on a incorporé un agent d'expansion dans une chambre mise sous pression et, sous pression, à broyer et refroidir l'extrudat à une température inférieure à son point de ramollissement, ce procédé étant caractérisé en ce qu'il comprend les étapes de:

a) extrusion du polymère à travers une filière;

b) découpage immédiat du polymère à la sortie de la filière et refroidissement des granulés ainsi obtenus dans un bain d'eau ou d'un fluide, ce bain étant maintenu à une température supérieure à la $T_g$ du polymère expansible; et

c) refroidissement lent des granulés obtenus dans l'étape b) d'une température au moins égale à $T_g$ +5°C à une température au plus égale à $T_g$ −5°C à une vitesse de refroidissement inférieure à 3°C/mn; le découpage du polymère en granulés et le refroidissement de ces granulés étant tous les deux mis en oeuvre à une pression supérieure à 2 bars (0,2 MPa).

2. Un procédé selon la revendication 1, dans lequel la température du bain d'eau ou d'un fluide dépend de la teneur en agent d'expansion du polymère et est généralement comprise entre la température ambiante et 80°C.

3. Un procédé selon l'une quelconque des revendications précédentes, dans lequel on met en oeuvre le refroidissement des granulés à une vitesse inférieure à 1 à 2°C/mn.

4. Un procédé selon l'une quelconque des revendications précédentes, dans lequel, pendant le refroidissement, la température des granulés est abaissée de 40 à 80°C à une température de 20°C à −40°C.

5. Un procédé selon l'une quelconque des revendications précédentes, dans lequel on met le découpage du polymère en oeuvre sur la face de la filière.

6. Un procédé selon l'une quelconque des revendications précédentes, dans lequel le découpage du polymère à la sortie de la filière et le refroidissement des granulés sont mis en oeuvre à une température comprise entre 5 et 15 bars (0,5 et 1,5 MPa).

7. Un procédé selon l'une quelconque des revendications précédentes, dans lequel le polymère thermoplastique est le polystyrène.

8. Dispositif de mise en oeuvre du procédé selon la revendication 1, comprenant:

a) une extrudeuse (2);

b) des moyens (5) d'injection de l'agent d'expansion dans l'extrudeuse (2);

c) une filière (3);

d) une découpeuse (7) et des tuyaux d'alimentation de cette filière (3) en eau ou en fluide;

e) une tour (10) de recuit destinée au refroidissement lent (recuit) des granulés;

f) des tuyaux d'introduction des granulés dans cette tour (10); et

g) des moyens (14, 15, 16) de récupération de l'eau ou du fluide; caractérisé en ce qu'il comprend en outre:

h) une chambre (8) fixée à la filière (3) et entourant la surface libre de cette filière de façon à ce que de l'eau ou du fluide sous pression puisse être introduite dans la filière (3); et

i) un dispositif (20) de pressurisation pour maintenir sous pression cette chambre (8), la tour de recuit (10), les tuyaux d'alimentation des granulés et les moyens de récupération (14, 15, 16) pour l'eau et le fluide; et en ce que la partie inférieure de la tour de recuit (10) est pourvue de moyens (11) d'introduction d'eau ou d'un fluide chauffé à une température propre à mettre en oeuvre le refroidissement des granulés de polymère expansible d'une température au moins égale à $T_g$ +5°C à une température au plus égale à $T_g$ −5°C, à une vitesse inférieure à 3°C/min, de préférence égale à 1 à 2°C/mn.

9. Dispositif selon la revendication 8, dans lequel le dispositif de pressurisation (20) est une enceinte fermée.

10. Dispositif selon la revendication 8 ou 9, dans lequel la tour de recuit (10) est pourvue d'un agitateur (12) et/ou de baffles internes pour contrôler et ralentir la chute des granulés.

11. Dispositif selon une quelconque des revendications 8 à 10, dans lequel le fond de la tour de recuit (10) est pourvu d'une vanne temporisée (13).

FIGURE